# EUROPEAN PATENT APPLICATION

(11) **EP 4 470 778 A1**
(43) Date of publication of application: **04.12.2024**
(21) Application number: 22923438.0
(22) Date of filing: 28.11.2022
(51) Int. Cl.: B32B 37/12, B32B 37/00, B65H 37/02

(54) **THREE-IN-ONE COMPOUNDING SYSTEM**

(30) Priority: 26.01.2022 CN 202210096068
(71) Applicant: Sinomech Corporation, Guangzhou, Guangdong 510803 (CN)
(72) Inventor: ZUO, Guangshen, Guangzhou, Guangdong 510800 (CN); HUANG, Shunli, Guangzhou, Guangdong 510800 (CN); LIU, Hongtao, Guangzhou, Guangdong 510800 (CN)
(74) Representative: Haseltine Lake Kempner LLP
(86) International application number: PCT/CN2022/134766
(87) International publication number: WO 2023/142646

(57) **Abstract**

A triplex laminating system, comprising: (1) Selecting appropriate adhesive-coated substrates, adhesive application surfaces, adhesive types, and adhesive mixing machine types according to the characteristics and usage requirements of the three-layer composite structure, including substrate type, arrangement, composite strength, and appearance. (2) Determining the corresponding composite reference and pressing sequence. (3) Determining the corresponding material feed path, suitable tension control mode, and machine arrangement. (4) Calculating and setting process parameters such as adhesive application, tension, temperature, and composite parameters. The composite machine arrangement models include three-machine horizontal arrangement, three-machine vertical arrangement, and four-machine horizontal arrangement. The composite machine arrangement models meet the different requirements for substrate unwinding positions, adhesive application positions and directions, material feed paths, tension control settings, and composite and winding positions for different composite structures. The two-step composite one-time forming method addresses the issue of product defects encountered in one-time composite processes for certain types of three-layer composite structures.

## Description

### Technical Field

The present invention relates to the field of solvent-free lamination, specifically to a triplex lamination process and laminating machine.

### Background Art

Solvent-free lamination is a method of combining two or more substrates using a two-component or single-component adhesive. The double-layer solvent-free lamination process and machines have been widely used in the flexible packaging industry. The triplex solvent-free lamination refers to a process where three layers of substrates are laminated in a single step. It has advantages such as high production efficiency, high product yield, and the ability to avoid certain drawbacks of the double-layer lamination process. Its application is expanding continuously. The three-layer composite film is formed by laminating the printed layer (S 1), the middle layer (or barrier layer) (S2), and the heat-sealing layer (S3) with two layers of adhesive. The adhesive can be either two-component or single-component. The materials, thickness, and arrangement of the three layers of substrates form the composite structure, which is determined by packaging processes or application characteristics and varies diversely. Thus, different triplex lamination processes and machines are needed to cater to different composite structures.

### Summary

The technical problem to be solved by the present invention is to provide a triplex laminating system that meets the requirements of different triplex lamination processes.

To solve the above technical problem, the technical solution of the present invention includes the following steps and contents:
(1) According to the types of substrates, arrangement, lamination strength, appearance characteristics, and usage requirements of the printed layer S1, the middle layer S2, and the heat-sealing layer S3 in the three-layer composite structure, select the adhesive-coated substrate, adhesive-coated surface, adhesive type, and adhesive mixing machine model.
(2) Determine the corresponding lamination benchmarks and pressing order.
(3) Determine the matching material path, suitable tension control mode, and laminating machine arrangement model.
(4) Calculate and set the process parameters for adhesive coating, tension, temperature, and lamination.

The laminating machine arrangement models include: three-unit horizontal arrangement model, three-unit vertical arrangement model, and four-unit horizontal arrangement model.

The three-unit horizontal arrangement model includes a first frame, under which are sequentially arranged the second unwinding and coating unit, the first unwinding and coating unit, and the laminating and rewinding unit. The first unwinding and coating unit includes the first unwinding unit, the first coating unit, and the first adhesive mixing auxiliary machine. The second unwinding and coating unit includes the second unwinding unit, the second coating unit, and the second adhesive mixing auxiliary machine. The laminating and rewinding unit includes the first laminating unit, the second laminating unit, the rewinding unit, and the third unwinding unit. A material belt moving channel is set at the lower part of the first frame, through which the second adhesive-coated material belt from the second unwinding and coating unit and the first adhesive-coated material belt from the first unwinding and coating unit enter the second laminating unit and the first laminating unit respectively, in parallel and in an up-and-down arrangement. The third unwinding unit delivers a non-adhesive-coated material belt to the second laminating unit.

The three-unit vertical arrangement model includes a second frame, under which are sequentially arranged the first unwinding and coating unit, the laminating and rewinding unit, the third unwinding and coating unit, and the vertical unwinding component located above the laminating and rewinding unit. The first unwinding and coating unit includes the first unwinding unit, the first coating unit, and the first adhesive mixing auxiliary machine. The laminating and rewinding unit includes the first laminating unit, the second laminating unit, and the rewinding unit. The third unwinding and coating unit includes the fourth unwinding unit, the third coating unit, and the third adhesive mixing auxiliary machine. The vertical unwinding component includes the fifth unwinding unit. A material belt moving channel is set in the second frame. The first adhesive-coated material belt from the first unwinding and coating unit enters the first laminating unit. The third adhesive-coated material belt from the third unwinding and coating unit enters the second laminating unit. The third non-adhesive-coated material belt from the vertical unwinding component enters the second laminating unit.

The four-unit horizontal arrangement model includes a third frame, under which are sequentially arranged the second unwinding and coating unit, the first unwinding and coating unit, the laminating and rewinding unit, and the third unwinding and coating unit. The first unwinding and coating unit includes the first unwinding unit, the first coating unit, and the first adhesive mixing auxiliary machine. The second unwinding and coating unit includes the second unwinding unit, the second coating unit, and the second adhesive mixing auxiliary machine. The laminating and rewinding unit includes the first laminating unit, the second laminating unit, and the rewinding unit. The third unwinding and coating unit is arranged in the opposite direction to the first unwinding and coating unit and includes the fourth unwinding unit, the third coating unit, and the third adhesive mixing auxiliary machine. A material belt moving channel is set in the lower part of the third frame. The second non-adhesive-coated material belt from the second unwinding and coating unit and the first adhesive-coated material belt from the first unwinding and coating unit enter the second laminating unit and the first laminating unit respectively, in parallel and in an up-and-down arrangement. The third adhesive-coated material belt from the third unwinding and coating unit enters the second laminating unit.

Further, according to the type of the middle layer S2 in the three-layer composite structure, the specific lamination process and suitable laminating machine arrangement are as follows:
(A): When the intermediate layer substrate S2 is PET, VMPET, NY, or composite film plastic film, a three-unit horizontal arrangement type is used for compounding. The printed layer S1, as the first substrate tape, is unwound by the first unwinding unit and adhesive is applied on the non-printed surface by the first coating unit. The intermediate layer S2, as the second substrate tape, is unwound by the second unwinding unit and adhesive is applied on the suitable adhesive surface by the second coating unit. The heat-sealing layer S3, as the third substrate tape, is unwound by the third unwinding unit. Both substrate adhesive processes use medium or low-temperature adhesive process parameters, and both adhesive types use medium or low-temperature two-component adhesives. For substrates with lower rigidity, the composite process adopts a one-step pressing method, where the three substrate tapes are pressed into a three-layer composite tape by the second composite unit in one step. The composite benchmark is the steel roller of the second composite unit, which serves as the speed and tension control benchmark for the entire machine. For substrates with higher rigidity, the composite process adopts a two-step pressing method. The second substrate tape and the third substrate tape are pressed into a double-layer substrate tape by the second composite unit. The double-layer substrate tape and the first substrate tape are pressed into a three-layer substrate tape by the first composite unit and then rewound by the rewinding unit. The first composite benchmark is the steel roller of the second composite unit, and the second composite benchmark is the steel roller of the first composite unit. The steel roller of the first composite unit serves as the speed and tension control benchmark for the entire machine.
(B): When the intermediate layer substrate S2 is various aluminum foils, a three-unit vertical arrangement type is used for compounding. The printed layer S1, as the first substrate tape, is unwound by the first unwinding unit and adhesive is applied on the non-printed surface by the first coating unit. The intermediate layer S2, as the second substrate tape, is unwound by the fifth unwinding unit. The heat-sealing layer S3, as the third substrate tape, is unwound by the fourth unwinding unit and adhesive is applied on the suitable surface by the third coating unit. Both substrate adhesive processes use medium or low-temperature adhesive process parameters, and both adhesive types use medium or low-temperature two-component adhesives. The composite process adopts a two-step pressing method. The second substrate tape and the third substrate tape are pressed into a double-layer substrate tape by the second composite unit. The double-layer substrate tape and the first substrate tape are pressed into a three-layer substrate tape by the first composite unit and then rewound by the rewinding unit. The first composite benchmark is the steel roller of the second composite unit, and the second composite benchmark is the steel roller of the first composite unit. The steel roller of the first composite unit serves as the speed and tension control benchmark for the entire machine.
(C): When the intermediate layer substrate S2 is double-coated paper, a four-unit horizontal arrangement type is used for compounding. The printed layer S1, as the first substrate tape, is unwound by the first unwinding unit and adhesive is applied on the non-printed surface by the first coating unit. The intermediate layer S2, as the second substrate tape, is unwound by the second unwinding unit but not coated with adhesive. The heat-sealing layer S3, as the third substrate tape, is unwound by the fourth unwinding unit and adhesive is applied on the suitable surface by the third coating unit. Both substrate adhesive processes use medium or low-temperature adhesive process parameters, and both adhesive types use medium or low-temperature two-component adhesives. The composite process adopts a two-step pressing method. The second substrate tape and the third substrate tape are pressed into a double-layer substrate tape by the second composite unit. The double-layer substrate tape and the first substrate tape are pressed into a three-layer substrate tape by the first composite unit and then rewound by the rewinding unit. The first composite benchmark is the steel roller of the second composite unit, and the second composite benchmark is the steel roller of the first composite unit. The steel roller of the first composite unit serves as the speed and tension control benchmark for the entire machine.
(D): When the intermediate layer substrate S2 is paper with a relatively rough and loose surface, a four-unit horizontal arrangement type is used for compounding. The printed layer S 1, as the first substrate tape, is unwound by the first unwinding unit and adhesive is applied on the non-printed surface by the first coating unit. The intermediate layer S2, as the second substrate tape, is unwound by the second unwinding unit but not coated with adhesive. The heat-sealing layer S3, as the third substrate tape, is unwound by the fourth unwinding unit and adhesive is applied on the suitable surface by the third coating unit. Both substrate adhesive processes use medium or high-temperature adhesive process parameters, and both adhesive types use medium or high-temperature single-component adhesives. The composite process adopts a two-step pressing method. The second substrate tape and the third substrate tape are pressed into a double-layer substrate tape by the second composite unit. The double-layer substrate tape and the first substrate tape are pressed into a three-layer substrate tape by the first composite unit and then rewound by the rewinding unit. The first composite benchmark is the steel roller of the second composite unit, and the second composite benchmark is the steel roller of the first composite unit. The steel roller of the first composite unit serves as the speed and tension control benchmark for the entire machine.
(E): When the intermediate layer substrate S2 is PET, PVC, or PS plastic sheets with a relatively smooth and tight surface, a three-unit horizontal arrangement type is used for compounding. The printed layer S1, as the first substrate tape, is unwound by the first unwinding unit and adhesive is applied on the non-printed surface by the first coating unit. The intermediate layer S2, as the second substrate tape, is unwound by the second unwinding unit and adhesive is applied on the suitable surface by the second coating unit. The heat-sealing layer S3, as the third substrate tape, is unwound by the third unwinding unit. Both substrate adhesive processes use medium or low-temperature adhesive process parameters, and both adhesive types use medium or low-temperature two-component adhesives. For substrates with lower rigidity, the composite process adopts a one-step pressing method, where the three substrate tapes are pressed into a three-layer composite tape by the second composite unit in one step. The composite benchmark is the steel roller of the second composite unit, which serves as the speed and tension control benchmark for the entire machine. For substrates with higher rigidity, the composite process adopts a two-step pressing method. The second substrate tape and the third substrate tape are pressed into a double-layer substrate tape by the second composite unit. The double-layer substrate tape and the first substrate tape are pressed into a three-layer substrate tape by the first composite unit and then rewound by the rewinding unit. The first composite benchmark is the steel roller of the second composite unit, and the second composite benchmark is the steel roller of the first composite unit. The steel roller of the first composite unit serves as the speed and tension control benchmark for the entire machine.

As an improvement, in process (A), the second unwinding unit, the first unwinding unit, the rewinding unit, and the third unwinding unit are arranged sequentially from left to right. The first coating unit is located above the first unwinding unit, and the second coating unit is located above the second unwinding unit. The first compounding unit and the second compounding unit are located above the third unwinding unit and the rewinding unit. In process (B), the first unwinding unit, the rewinding unit, and the fourth unwinding unit are arranged sequentially from left to right. The first coating unit is located above the first unwinding unit, and the third coating unit is located above the fourth unwinding unit. The first compounding unit and the second compounding unit are located above the rewinding unit, and the fifth unwinding unit is located above the second compounding unit. In processes (C, D, and E), the second unwinding unit, the first unwinding unit, the rewinding unit, and the fourth unwinding unit are arranged sequentially from left to right. The first coating unit is located above the first unwinding unit, and the third coating unit is located above the fourth unwinding unit. The first compounding unit and the second compounding unit are located above the rewinding unit.

As an improvement, in process (A), the tension T1 of the rewinding segment controls the path material tape from the rewinding roll to the first compounding steel roller. The tension T2 of the step compounding segment controls the path material tape from the first compounding steel roller to the second compounding steel roller. The tension T3 of the first channel segment controls the path material tape from the first coating steel roller to the first compounding steel roller. The tension T4 of the first unwinding segment controls the path material tape from the first unwinding roll to the first coating steel roller. The tension T5 of the second channel segment controls the path material tape from the second coating steel roller to the second compounding steel roller. The tension T6 of the second unwinding segment controls the path material tape from the second unwinding roll to the second coating steel roller. The tension T7 of the third unwinding segment controls the path material tape from the third unwinding roll to the second compounding steel roller. In process (B), the tension T1 of the rewinding segment controls the path material tape from the rewinding roll to the first compounding steel roller. The tension T2 of the step compounding segment controls the path material tape from the first compounding steel roller to the second compounding steel roller. The tension T3 of the first channel segment controls the path material tape from the first coating steel roller to the first compounding steel roller. The tension T4 of the first unwinding segment controls the path material tape from the first unwinding roll to the first coating steel roller. The tension T5 of the fifth unwinding segment controls the path material tape from the fifth unwinding roll to the second compounding steel roller. The tension T6 of the third channel segment controls the path material tape from the third coating steel roller to the second compounding steel roller. The tension T7 of the fourth unwinding segment controls the path material tape from the fourth unwinding roll to the third coating steel roller. In processes (C, D, and E), the tension T1 of the rewinding segment controls the path material tape from the rewinding roll to the second compounding steel roller. The tension T2 of the step compounding segment controls the path material tape from the first compounding steel roller to the second compounding steel roller. The tension T3 of the first channel segment controls the path material tape from the first coating steel roller to the first compounding steel roller. The tension T4 of the first unwinding segment controls the path material tape from the first unwinding roll to the first coating steel roller. The tension T5 of the second channel segment controls the path material tape from the second unwinding roll to the second compounding steel roller. The tension T6 of the third channel segment controls the path material tape from the third coating steel roller to the second compounding steel roller. The tension T7 of the fourth unwinding segment controls the path material tape from the fourth unwinding roll to the second coating steel roller.

As an improvement, high-temperature, medium-temperature, and low-temperature two-component adhesives are supplied by a two-component mixing glue machine, while high-temperature and medium-temperature single-component adhesives are supplied by a single-component glue machine.

As an improvement, in process (A), a first unwinding tension detection component is set between the first unwinding unit and the first coating unit. A first channel tension detection component is set between the first coating unit and the first compounding unit. A second unwinding tension detection component is set between the second unwinding unit and the second coating unit. A second channel tension detection component is set between the second coating unit and the second compounding unit. A third unwinding tension detection component is set between the third unwinding unit and the second compounding unit. A first tension control roller is set between the first compounding unit and the second compounding unit, and a second tension control roller is arranged between the first compounding unit and the rewinding unit. A first adjustment roller assembly is set between the first channel tension detection component and the first compounding unit. A second adjustment roller assembly is set between the second channel tension detection component and the second compounding unit. A third adjustment roller assembly is set between the third unwinding tension detection component and the second compounding unit.

As an improvement, in process (B), a first unwinding tension detection component is set between the first unwinding unit and the first coating unit. A first channel tension detection component is set between the first coating unit and the first compounding unit. A third channel tension detection component is set between the third coating unit and the second compounding unit. A first tension control roller is set between the first compounding unit and the second compounding unit, and a second tension control roller is arranged between the first compounding unit and the rewinding unit. A third tension control roller is set between the fifth unwinding unit and the second compounding unit. A first adjustment roller assembly is set between the first channel tension detection component and the first compounding unit. A second adjustment roller assembly is set between the fifth unwinding unit and the second compounding unit. A third adjustment roller assembly is set between the third channel tension detection component and the second compounding unit.

As an improvement, in processes (C, D, and E), the first unwinding unit is equipped with a first unwinding tension detection component between it and the first coating unit. The first coating unit is equipped with a first channel tension detection component between it and the first laminating unit. The second unwinding unit is equipped with a second unwinding tension detection component between it and the second laminating unit. The fourth unwinding unit is equipped with a fourth unwinding tension detection component between it and the third coating unit. The third coating unit is equipped with a third channel tension detection component between it and the second laminating unit. A first tension control roller is positioned between the first and second laminating units, and a second tension control roller is placed between the first laminating unit and the winding unit. The first channel tension detection component is equipped with a first adjustment roller assembly between it and the first laminating unit, the second unwinding tension detection component is equipped with a second adjustment roller assembly between it and the second laminating unit, and the third channel tension detection component is equipped with a third adjustment roller assembly between it and the second laminating unit.

As an improvement, the first unwinding tension detection component, second unwinding tension detection component, third unwinding tension detection component, fourth unwinding tension detection component, first channel tension detection component, second channel tension detection component, and third channel tension detection component all adopt a tension type with floating roller balanced low friction cylinders.

The beneficial effects brought by this invention compared to existing technology are:
The triplex composite process method and the arrangement of composite machine models can meet the optimal process and machine arrangement for three-layer composite structures with different composite structures, adopting two-step composite one-time forming, thereby solving product defect problems that exist when some relatively rigid substrates are subjected to three-layer one-time composite.

### Description of the Drawings

Figure 1 is a schematic diagram of the three-unit horizontal arrangement model.
Figure 2 is a schematic diagram of the three-unit vertical arrangement model.
Figure 3 is a schematic diagram of the four-unit horizontal arrangement model.

### Detailed Description

The present invention is further described in conjunction with the accompanying figures.

### Embodiment 1

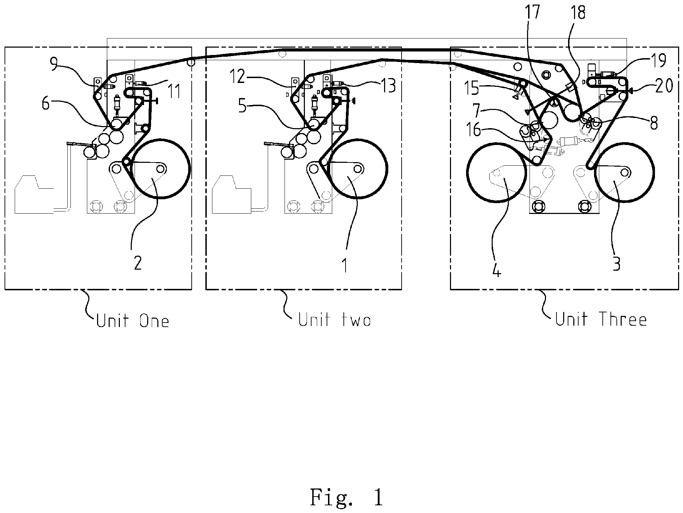

As shown in Figure 1, the three-unit horizontal arrangement type machine model consists of Unit One, Unit Two, and Unit Three. Unit One is the second unwinding and coating unit, Unit Two is the first unwinding and coating unit, and Unit Three is the laminating and rewinding unit. The three-unit horizontal arrangement type is arranged sequentially from left to right, including the second unwinding unit 2, the first unwinding unit 1, the rewinding unit 4, and the third unwinding unit 3. The first coating unit 5 is located above the first unwinding unit 1, the second coating unit 6 is located above the second unwinding unit 2, and the first laminating unit 7 and the second laminating unit 8 are located above the third unwinding unit 3 and the rewinding unit 4.

As shown in Figure 1, a first unwinding tension detection component 13 is arranged between the first unwinding unit 1 and the first coating unit 5, and a first channel tension detection component 12 is arranged between the first coating unit 5 and the first laminating unit 7. A second unwinding tension detection component 11 is arranged between the second unwinding unit 2 and the second coating unit 6, and a second channel tension detection component 9 is arranged between the second coating unit 6 and the second laminating unit 8. A third unwinding tension detection component 19 is arranged between the third unwinding unit 3 and the second laminating unit 8. A first tension control roller 17 is arranged between the first laminating unit 7 and the second laminating unit 8, and a second tension control roller 16 is arranged between the first laminating unit 7 and the rewinding unit 4. A first adjustment roller assembly 15 is arranged between the first channel tension detection component 12 and the first laminating unit 7, a second adjustment roller assembly 18 is arranged between the second channel tension detection component 9 and the second laminating unit 8, and a third adjustment roller assembly 20 is arranged between the third unwinding tension detection component 19 and the second laminating unit 8.

The material belt path from the second unwinding unit 2 through the second coating unit 6, the second channel tension detection component 9, and the second adjustment roller assembly 18 to the second laminating unit 8 is the second adhesive-coated base material belt path. The material belt path from the first unwinding unit 1 through the first unwinding tension detection component 13, the first coating unit 5, the first channel tension detection component 12, and the first adjustment roller assembly 15 to the first laminating unit 7 is the first adhesive-coated base material belt path. The second adhesive-coated base material belt path and the first adhesive-coated base material belt path enter the second and first laminating units respectively in parallel along the material belt moving channels. The material belt path from the third unwinding unit 3 through the third unwinding tension detection component 19 and the third adjustment roller assembly 20 to the second laminating unit 8 is the first non-adhesive-coated base material belt path, entering the second laminating unit. The material belt path from the first laminating unit 7 to the rewinding unit 4 is the rewinding material belt path.

When necessary, the position of the adjustment roller 15 can be moved to make the first adhesive-coated base material belt path enter the second laminating unit 8, allowing for three-layer one-step pressing composite.

The first unwinding tension detection component 13, the second unwinding tension detection component 11, the third unwinding tension detection component 19, the first channel tension detection component 12, and the second channel tension detection component 9 all use floating roller balanced low-friction cylinder tension types. The first unwinding tension detection component 13, the second unwinding tension detection component 11, and the third unwinding tension detection component 19 all use standard "U"-shaped wrap angle floating rollers with a film wrap angle of 180 degrees. The first channel tension detection component 12 and the second channel tension detection component 9 use "V"-shaped wrap angle floating rollers with a film wrap angle of 120 degrees, and their wrap angles are led out by the coating rubber roller. The rewinding section tension T1 controls the material belt path from the rewinding roll to the first laminating steel roller, the step-by-step composite section tension T2 controls the material belt path from the first laminating steel roller to the second laminating steel roller, the first channel section tension T3 controls the material belt path from the first coating steel roller to the first laminating steel roller, the first feeding section tension T4 controls the material belt path from the first feeding roll to the first coating steel roller, the second channel section tension T5 controls the material belt path from the second coating steel roller to the second laminating steel roller, the second feeding section tension T6 controls the material belt path from the second feeding roll to the second coating steel roller, and the third feeding section tension T7 controls the material belt path from the third feeding roll to the second laminating steel roller.

In the triplex composite process, the printing layer substrate S1, the intermediate layer (barrier layer) substrate S2, and the heat-sealing layer substrate S3 material belts are glued together as follows:
When the intermediate layer substrate S2 is a plastic film such as PET, VMPET, NY, or composite film, the three-unit horizontal arrangement type machine model is used for the composite process as follows: The printing layer S1 as the first base material belt is unwound by the first unwinding unit 1 and coated with glue on the non-printing side by the first coating unit 5, following the first adhesive-coated base material belt path. The intermediate layer S2 as the second base material belt is unwound by the second unwinding unit 2 and coated with glue on the appropriate side (larger corona value side) by the second coating unit 6, following the second adhesive-coated base material belt path. The heat-sealing layer S3 as the third base material belt is unwound by the third unwinding unit 3, following the non-adhesive-coated base material belt path. Both base material coating processes can use medium-temperature or low-temperature adhesive coating process parameters, selected or calculated from the process parameter scheme table. Both adhesive types can use medium-temperature or low-temperature two-component adhesives. For the composite process of less rigid substrates, a one-step pressing method can be used, where all three base material belts are pressed together by the second laminating unit 8 to complete the composite, with the composite reference being the steel roller of the second laminating unit. The steel roller of the second laminating unit serves as the whole machine speed reference and tension control reference. For the composite process of more rigid substrates, a two-step pressing method is used, where the second base material belt and the third base material belt are pressed together into a double-layer base material belt by the second laminating unit 8, and then the double-layer base material belt and the first base material belt are pressed together into a three-layer base material belt by the first laminating unit 7, and then rewound by the rewinding unit. The first lamination reference is the steel roller of the second laminating unit, and the second lamination reference is the steel roller of the first laminating unit. The steel roller of the first laminating unit serves as the whole machine speed reference and tension control reference.

Both coating units use a two-component mixing glue machine for adhesive supply in low-temperature and medium-temperature adhesive coating processes.

### Embodiment 2

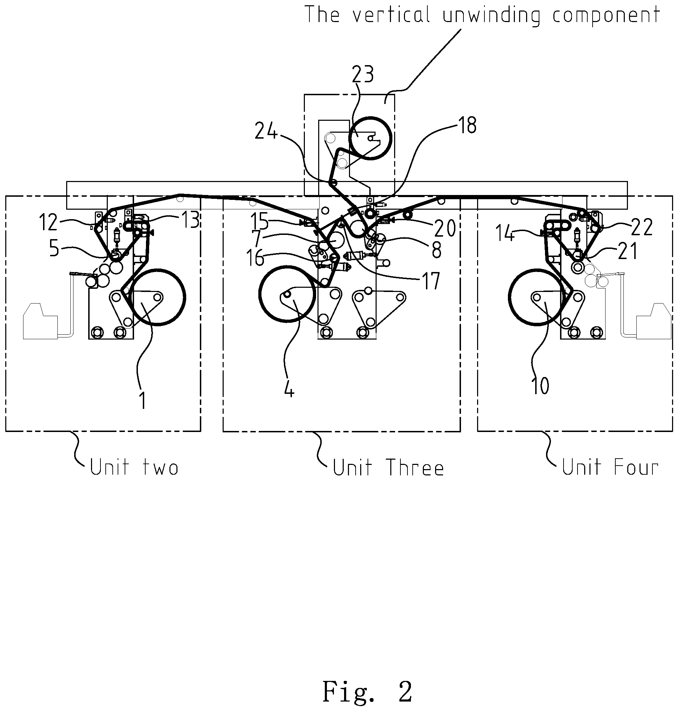

As shown in Figure 2, the three-unit vertical arrangement type machine model consists of Unit Two, Unit Three, Unit Four, and the vertical unwinding component. Unit Two is the first unwinding and coating unit, Unit Three is the laminating and rewinding unit, Unit Four is the third unwinding and coating unit, and the vertical unwinding component provides the fifth unwinding function. The three-unit vertical arrangement type is arranged sequentially from left to right, including the first unwinding unit 1, the rewinding unit 4, and the fourth unwinding unit 10. The first coating unit 5 is located above the first unwinding unit 1, and the third coating unit 21 is arranged above the fourth unwinding unit 10 to the right. The first laminating unit 7 and the second laminating unit 8 are located above the rewinding unit 4, and the fifth unwinding unit 23 is located above the second laminating unit 8.

As shown in Figure 2, a first unwinding tension detection component 13 is arranged between the first unwinding unit 1 and the first coating unit 5, and a first channel tension detection component 12 is arranged between the first coating unit 5 and the first laminating unit 7. A fourth unwinding tension detection component 14 is arranged between the fourth unwinding unit 10 and the third coating unit 21, and a third channel tension detection component 22 is arranged between the third coating unit 21 and the second laminating unit 8. A first tension control roller 17 is arranged between the first laminating unit 7 and the second laminating unit 8, and a second tension control roller 16 is arranged between the first laminating unit 7 and the rewinding unit 4. A third tension control roller 24 is arranged between the fifth unwinding unit 23 and the second laminating unit 8. A first adjustment roller assembly 15 is arranged between the first channel tension detection component 12 and the first laminating unit 7, a second adjustment roller assembly 18 is arranged between the third tension control roller 24 and the second laminating unit 8, and a third adjustment roller assembly 20 is arranged between the third channel tension detection component 22 and the second laminating unit 8.

As shown in Figure 2, the material belt path from the first unwinding unit 1 through the first unwinding tension detection component 13, the first coating unit 5, the first channel tension detection component 12, and the first adjustment roller assembly 15 to the first laminating unit 7 is the first adhesive-coated base material belt path. The material belt path from the fourth unwinding unit 10 through the fourth unwinding tension detection component 14, the third coating unit 21, the third channel tension detection component 22, and the third adjustment roller assembly 20 to the second laminating unit 8 is the third adhesive-coated base material belt path. The material belt path from the fifth unwinding unit 23 through the third tension control roller 24 and the second adjustment roller assembly 18 to the second laminating unit 8 is the second non-adhesive-coated base material belt path. The material belt path from the first laminating unit 7 to the rewinding unit 4 is the rewinding material belt path.

As shown in Figure 2, the first unwinding tension detection component 13, the fourth unwinding tension detection component 14, the first channel tension detection component 12, and the fourth channel tension detection component 22 all use floating roller balanced low-friction cylinder tension types. The first unwinding tension detection component 13 and the fourth unwinding tension detection component 14 both use standard "U"-shaped wrap angle floating rollers with a film wrap angle of 180 degrees. The first channel tension detection component 12 and the third channel tension detection component 22 use "V"-shaped wrap angle floating rollers with a film wrap angle of 120 degrees, and their wrap angles are led out by the coating rubber roller. The rewinding section tension T1 controls the material belt path from the rewinding roll to the first laminating steel roller, the step-by-step composite section tension T2 controls the material belt path from the first laminating steel roller to the second laminating steel roller, the first channel section tension T3 controls the material belt path from the first coating steel roller to the first laminating steel roller, the first feeding section tension T4 controls the material belt path from the first feeding roll to the first coating steel roller, the fifth feeding section tension T5 controls the material belt path from the fifth feeding roll to the second laminating steel roller, the third channel section tension T6 controls the material belt path from the third coating steel roller to the second laminating steel roller, and the fourth feeding section tension T7 controls the material belt path from the fourth feeding roll to the third coating steel roller.

In the triplex composite process, the printing layer substrate S1, the intermediate layer (barrier layer) substrate S2, and the heat-sealing layer substrate S3 material belts are glued together as follows:
When the intermediate layer substrate S2 is an aluminum foil substrate, the three-unit vertical arrangement type machine model is used for the composite process as follows: The printing layer S1 as the first base material belt is unwound by the first unwinding unit 1 and coated with glue on the non-printing side by the first coating unit 5, following the first adhesive-coated base material belt path. The intermediate layer S2 as the second base material belt is unwound by the fifth unwinding unit 23, following the non-adhesive-coated base material belt path. The heat-sealing layer S3 as the third base material belt is unwound by the fourth unwinding unit 10 and coated with glue on the appropriate side by the third coating unit 21, following the third adhesive-coated base material belt path. Both base material coating processes can use medium-temperature or low-temperature adhesive coating process parameters, selected or calculated from the process parameter scheme table. Both adhesive types can use medium-temperature or low-temperature two-component adhesives. The composite process uses a two-step pressing method, where the second base material belt and the third base material belt are pressed together into a double-layer base material belt by the second laminating unit 8, and then the double-layer base material belt and the first base material belt are pressed together into a three-layer base material belt by the first laminating unit 7, and then rewound by the rewinding unit. The first lamination reference is the steel roller of the second laminating unit, and the second lamination reference is the steel roller of the first laminating unit. The steel roller of the first laminating unit serves as the whole machine speed reference and tension control reference.

Both coating units use a two-component mixing glue machine for adhesive supply in low-temperature and medium-temperature adhesive coating processes.

### Embodiment 3

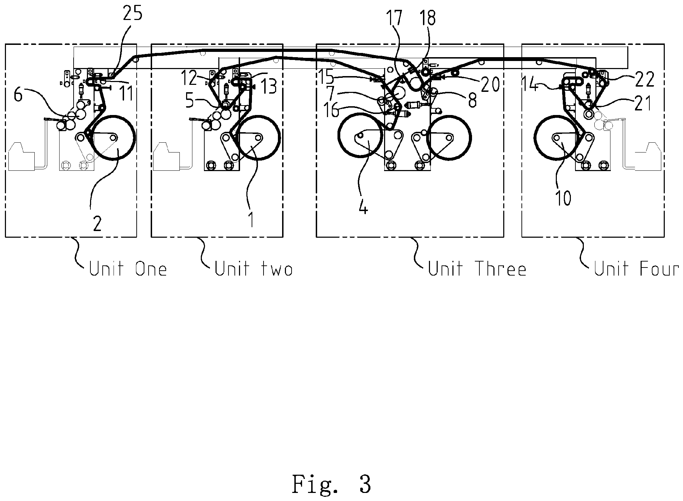

As shown in Figure 3, the four-unit horizontal arrangement type includes: Unit One, Unit Two, Unit Three, and Unit Four. Unit One is the second unwinding and coating unit, Unit Two is the first unwinding and coating unit, Unit Three is the laminating and rewinding unit, and Unit Four is the third unwinding and coating unit. The four-unit horizontal arrangement type is arranged sequentially from left to right, including the second unwinding unit 2, the first unwinding unit 1, the rewinding unit 4, and the fourth unwinding unit 10. The first coating unit 5 is located above the first unwinding unit 1, the third coating unit 21 is located above the fourth unwinding unit 10, and the first laminating unit 7 and the second laminating unit 8 are located above the rewinding unit 4.

As shown in Figure 3, a first unwinding tension detection component 13 is arranged between the first unwinding unit 1 and the first coating unit, and a first channel tension detection component 12 is arranged between the first coating unit 5 and the first laminating unit 7; a second unwinding tension detection component 11 is arranged between the second unwinding unit 2 and the second laminating unit 8; a third channel tension detection component 22 is arranged between the third coating unit 21 and the second laminating unit 8, and a fourth unwinding tension detection component 14 is arranged between the fourth unwinding unit 10 and the third coating unit 21; a first tension control roller 17 is arranged between the first laminating unit 7 and the second laminating unit 8, and a second tension control roller 16 is arranged between the first laminating unit 7 and the rewinding unit 4; a first adjustment roller assembly 15 is arranged between the first channel tension detection component 12 and the first laminating unit 7, a second adjustment roller assembly 18 is arranged between the second unwinding tension detection component 11 and the second laminating unit 8, and a third adjustment roller assembly 20 is arranged between the third channel tension detection component 22 and the second laminating unit 8.

As shown in Figure 3, the material belt path from the first unwinding unit 1, passing through the first unwinding tension detection component 13, the first coating unit 5, the first channel tension detection component 12, the first adjustment roller assembly 15, to the first laminating unit 7 is the first adhesive-coated base material belt path. The material belt path from the fourth unwinding unit 10, passing through the fourth unwinding tension detection component 14, the third coating unit 21, the third channel tension detection component 22, the third adjustment roller assembly 20, to the second laminating unit 8 is the third adhesive-coated base material belt movement path. The material belt path from the second unwinding unit 2, passing through the second unwinding tension detection component 11, the second adjustment roller assembly 18, to the second laminating unit 8 is the third non-adhesive-coated base material belt path. The material belt path from the first laminating unit 7 to the rewinding unit 4 is the rewinding material belt movement path.

As shown in Figure 3, the first unwinding tension detection component 13, the second unwinding tension detection component 11, the fourth unwinding tension detection component 14, the first channel tension detection component 12, and the third channel tension detection component 22 all adopt floating roller balanced low-friction cylinder tension type. The first unwinding tension detection component 13, the second unwinding tension detection component 11, and the fourth unwinding tension detection component 14 all adopt the standard "U"-shaped wrapping angle floating roller, with a film wrapping angle of 180 degrees; the first channel tension detection component 12 and the third channel tension detection component 22 adopt "V"-shaped wrapping angle floating rollers, with a film wrapping angle of 120 degrees, and the wrapping angle entry end is guided out by the coating glue roller. The tension T1 of the rewinding section controls the material belt from the rewinding roll to the first laminating steel roller path, the composite section tension T2 controls the material belt from the first laminating steel roller to the second laminating steel roller path, the channel section tension T3 controls the material belt from the first coating steel roller to the first laminating steel roller path, the unwinding section tension T4 controls the material belt from the first unwinding roll to the first coating steel roller path, the channel section tension T5 controls the material belt from the second unwinding roll to the second laminating steel roller path, the channel section tension T6 controls the material belt from the third coating steel roller to the second laminating steel roller path, and the unwinding section tension T7 controls the material belt from the fourth unwinding roll to the third coating steel roller path.

As shown in Figure 3, according to the process requirements, low-temperature adhesive coating and medium-temperature adhesive coating use a two-component mixing glue machine for adhesive supply, and high-temperature adhesive coating uses either a single-component adhesive supply machine or a two-component mixing glue machine for adhesive supply.

The triplex composite process involves laminating the printing layer base material S1, the intermediate layer (barrier layer) base material S2, and the heat seal layer base material S3 together using glue. Specifically:
When the intermediate layer base material S2 is double-coated paper, the four-unit horizontal arrangement type machine is used for lamination, employing the following lamination process: the printing layer S1, as the first base material belt, is unwound by the first unwinding unit 1 and coated with glue on the non-printing side by the first coating unit 5, following the first adhesive-coated base material belt path. The intermediate layer S2, as the second base material belt, is unwound by the second unwinding unit 2 but not coated with glue, following the third non-adhesive-coated base material belt path. The heat seal layer S3, as the third base material belt, is unwound by the fourth unwinding unit 10 and coated with glue on the appropriate side by the third coating unit 21, following the third adhesive-coated base material belt path. Both base material coating processes can use medium-temperature or low-temperature adhesive coating process parameters, selected or calculated from the process parameter scheme table. Both adhesive types can use medium-temperature or low-temperature two-component adhesives. The composite process adopts a two-step pressing method; the second base material belt and the third base material belt are pressed together into a double-layer base material belt by the second laminating unit 8, and the double-layer base material belt and the first base material belt are pressed together into a three-layer base material belt by the first laminating unit 7, then rewound by the rewinding unit. The first lamination reference is the second laminating unit steel roller, the second lamination reference is the first laminating unit steel roller, and the first laminating unit steel roller serves as the whole machine speed reference and tension control reference.

Both coating units use a two-component mixing glue machine for adhesive supply in low-temperature and medium-temperature adhesive coating processes.

When the intermediate layer base material S2 is rough and loose paper, the four-unit horizontal arrangement type machine is used for lamination, employing the following lamination process: the printing layer S1, as the first base material belt, is unwound by the first unwinding unit 1 and coated with glue on the non-printing side by the first coating unit 5, following the first adhesive-coated base material belt movement path. The intermediate layer S2, as the second base material belt, is unwound by the second unwinding unit 2 but not coated with glue, following the third non-adhesive-coated base material belt path. The heat seal layer S3, as the third base material belt, is unwound by the fourth unwinding unit 10 and coated with glue on the appropriate side by the third coating unit 21, forming the third adhesive-coated base material belt path. Both base material coating processes use medium-temperature or high-temperature adhesive coating process parameters, selected or calculated from the process parameter scheme table. Both adhesive types can use medium-temperature or high-temperature single-component adhesives. The composite process adopts a two-step pressing method; the second base material belt and the third base material belt are pressed together into a double-layer base material belt by the second laminating unit 8, and the double-layer base material belt and the first base material belt are pressed together into a three-layer base material belt by the first laminating unit 7, then rewound by the rewinding unit. The first lamination reference is the second laminating unit steel roller, the second lamination reference is the first laminating unit steel roller, and the first laminating unit steel roller serves as the whole machine speed reference and tension control reference.

Both coating units use a single-component mixing glue machine for adhesive supply in high-temperature and medium-temperature adhesive coating processes.

When the intermediate layer base material S2 is a thick plastic sheet such as PET, PVC, PS, etc., the four-unit horizontal arrangement type machine is used for lamination, employing the following lamination process: the printing layer S1, as the first base material belt, is unwound by the first unwinding unit 1 and coated with glue on the non-printing side by the first coating unit 5, following the first adhesive-coated base material belt path. The intermediate layer S2, as the second base material belt, is unwound by the second unwinding unit 2 but not coated with glue, following the third non-adhesive-coated base material belt path. The heat seal layer S3, as the third base material belt, is unwound by the fourth unwinding unit 10 and coated with glue on the appropriate side by the third coating unit 21, following the third adhesive-coated base material belt path. Both base material coating processes use medium-temperature or high-temperature adhesive coating process parameters, selected or calculated from the process parameter scheme table. Both adhesive types can use medium-temperature or low-temperature two-component adhesives. The composite process adopts a two-step pressing method; the second base material belt and the third base material belt are pressed together into a double-layer base material belt by the second laminating unit 8, and the double-layer base material belt and the first base material belt are pressed together into a three-layer base material belt by the first laminating unit 7, then rewound by the rewinding unit. The first lamination reference is the second laminating unit steel roller, the second lamination reference is the first laminating unit steel roller, and the first laminating unit steel roller serves as the whole machine speed reference and tension control reference.

Both coating units use a two-component mixing glue machine for adhesive supply in high-temperature and medium-temperature adhesive coating processes.

### Embodiment 4

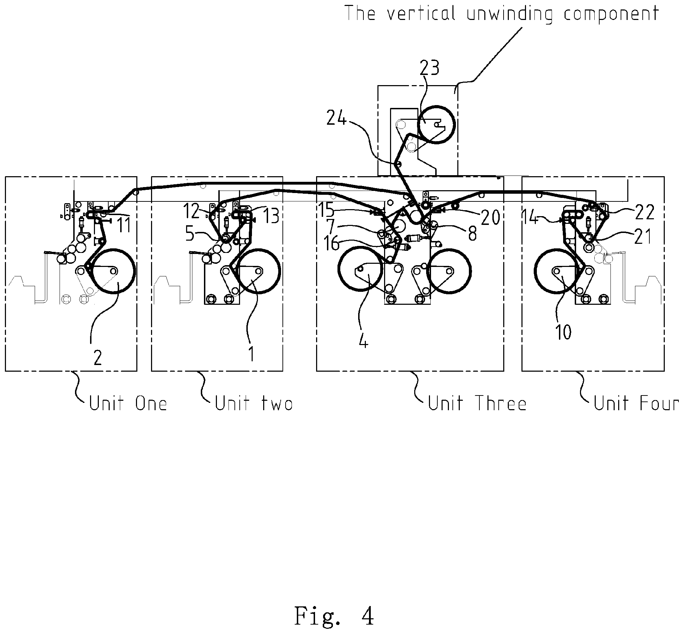

As shown in Figure 4, the four-unit vertical arrangement type includes: Unit One, Unit Two, Unit Three, Unit Four, and the vertical unwinding component. Unit One is the second unwinding and coating unit, Unit Two is the first unwinding and coating unit, Unit Three is the laminating and rewinding unit, Unit Four is the third unwinding and coating unit, and the vertical unwinding component provides the fifth unwinding function. The structure of each unit in the four-unit vertical arrangement type is the same as the units described in the previous types, and the paths and tension control methods are also the same. This type can complete all composite processes in Embodiments 1, 2, and 3, which will not be detailed here, but this type is also within the protection scope of this patent.

The determination of the tension values of the segmented material belts in all the above composite processes and the tension control parameters of the tension control elements comply with the following principles and calculations:
Each segment's tension value determination: The size of each segment's tension value is determined according to the material, width, and thickness of each segment's base material; T=mE*B*h, where T is in Newtons, m is the calculation coefficient, E is the material elastic modulus in Newtons per square meter, B is the material belt width in meters, and h is the material belt thickness in millimeters.

Each segment's tension setting: The tension type of the floating roller balanced low-friction cylinder is set by adjusting the cylinder air pressure value to determine the tension value of this segment, where the balance cylinder air pressure of the "U"-shaped wrapping angle floating roller is determined by the formula P=2*T/S, and the balance cylinder air pressure of the "V"-shaped wrapping angle floating roller is determined by the formula P=T/S, where P is the calculated working pressure of the low-friction cylinder in Mpa, T is the calculated tension value in N, and S is the calculated cylinder area in mm².

The tension suitable for the small displacement tension controller is directly adjusted and set on the control panel.

After the tension setting is completed and the machine is started, the adjustment and stabilization of each segment's tension value are adjusted by the built-in control program of the PLC, which adjusts the speed of each related motor to achieve stable operation of the whole machine.

Supplementary instructions for machine type arrangement:
1. When using the one-step lamination process, the speed of the first laminating unit steel roller and the second laminating steel roller is synchronized, the first laminating unit glue roller does not press, and the material belt tension control between the first laminating unit steel roller and the second laminating steel roller is zero.
2. Unit One (second unwinding and coating unit) in the four-unit horizontal arrangement type only uses its unwinding function, and the material belt is guided to the third non-adhesive-coated base material belt path through the guide roller 25.
3. Unit Three (laminating and rewinding unit) is used in the three-unit vertical arrangement type and the four-unit horizontal arrangement type, without using its third unwinding function, and the material belt from the fourth unwinding is received by the guide roller of the third adjustment roller assembly 20 and enters the second laminating unit.
4. The four-unit horizontal arrangement type can complete the composite process of the three-unit horizontal arrangement type.

Matters to be explained by the inventor:
The above machine arrangements are the optimal types suitable for the composite process. Based on this principle, they are not limited to the above arrangements. The same type of S2 base material can also be suitable for different composite processes and machine types. New processes and machine arrangements cannot be considered new solutions outside this invention.

The composite process parameters classified according to the type of intermediate layer S2 in the three-layer composite structure are listed in the table "Composite Arrangement Types and Main Process Parameter Schemes Corresponding to Different Intermediate Layer S2 Base Materials":

**Table 1: Composite Arrangement Models and Main Process Parameter Schemes for Different Intermediate Layers (S2) Materials**

| **Type of Intermediate Layer (Barrier Layer) S2 Material and Common Examples** | | **Coating Material** | **Adhesive Type** | **Working Temperature of Adhesive Storage Tank t_{1A}, t_{1B} (°C)** | **Composite Machine Model** | **Composite Process Steps** | **Set Temperature of Steel Roller Heating Machine (°C)** | | | **Measurement Gap of Adhesive Tank (10µm)** | **Transfer Steel Roller Rate η₁** | Transfer Rubber Roller Rate **η₂** |
|---|---|---|---|---|---|---|---|---|---|---|---|---|
| | | | | | | | **Metering and transfer steel rollers t₂** | **Coating Steel Roller t₃** | **Composite Steel Roller t₄** | | | |
| Plastic Film | PET, VMPET, NY, Composite Film | S1 | Medium Temperature Two-Component | [40,60] | Horizontal Arrangement of Three Units | Two-step pressing or One-step pressing | [t_{1A},t_{1A}+1.5K_{1]} | [t_{1A},t_{1A}+2K₁] | [t_{1A}-20,t_{1A}-15] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-5,t_{1A}-3] | G_{L}=[8,9] | η_{1L}=[1.7,2.9] | η_{2L}=[20,25] |
| | | S2 | Medium Temperature Two-Component | [40,60] | | | [t_{1A},t_{1A}+1.5K_{1]} | [t_{1A},t_{1A}+2K₁] | [t_{1A}-20,t_{1A}-15] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-5,t_{1A}-3] | G_{L}=[8,9] | η_{1L}=[1.7,2.9] | η_{2L}=[20,25] |
| Aluminum Foil | Various Aluminum Foils | S1 | Medium Temperature Two-Component | [40,60] | Vertical Arrangement of Three Units | Two-step pressing | [t_{1A},t_{1A}+1.5K_{1]} | [t_{1A},t_{1A}+2K₁] | [t_{1A}-K₃-3 ,t_{1A}-K₃] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-15,t_{1A}-10] | G_{L}=[8,9] | η_{1L}=[1.7,2.9] | η_{2L}=[20,25] |
| | | S3 | Medium Temperature Two-Component | [40,60] | | | [t_{1A},t_{1A}+1.5K_{1]} | [t_{1A},t_{1A}+2K₁] | [t_{1A}-K₃-3 ,t_{1A}-K₃] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-15,t_{1A}-10] | G_{L}=[8,9] | η_{1L}=[1.7,2.9] | η_{2L}=[20,25] |
| Paper | Double Coated Paper | S1 | Medium Temperature Two-Component | [40,60] | Horizontal Arrangement of Four Units | Two-step pressing | [t_{1A},t_{1A}+1.5K_{1]} | [t_{1A},t_{1A}+2K₁] | [t_{1A}-20,t_{1A}-15] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-10,t_{1A}-5] | G_{L}=[8,9] | η_{1L}=[1.7,2.9] | η_{2L}=[20,25] |
| | | S3 | Medium Temperature Two-Component | [40,60] | | | [t_{1A},t_{1A}+1.5K_{1]} | [t_{1A},t_{1A}+2K₁] | [t_{1A}-20,t_{1A}-15] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-10,t_{1A}-5] | G_{L}=[8,9] | η_{1L}=[1.7,2.9] | η_{2L}=[20,25] |
| | Various Other Paper | S1 | Medium Temperature Two-Component | [65,90] | Horizontal Arrangement of Four Units | Two-step pressing | [t₁,t₁+2.5K₁] | [t₁,t₁+3K₁] | [t₁-20K₂-5,t₁-20K₂] | G_{H}=[10,12] | η_{1H}=[2.5,4.5] | η_{2H}=[20,35] |
| | | | Low Temperature Two-Component | [45,65) | | | [t₁,t₁+1.5K₁] | [t₁,t₁+2K₁] | [t_{1A}-30,t_{1A}-25] | G_{L}=[9,10] | η_{1H}=[2.5,3.5] | η_{2L}=[25,35] |
| | | S3 | Medium Temperature Two-Component | [65,90] | | | [t₁,t₁+2.5K₁] | [t₁,t₁+3K₁] | [t₁-20K₂-5,t₁-20K₂] | G_{H}=[10,12] | η_{1H}=[2.5,4.5] | η_{2H}=[20,35] |
| | | | Low Temperature Two-Component | [45,65) | | | [t₁,t₁+1.5K₁] | [t₁,t₁+2K₁] | [t_{1A}-30,t_{1A}-25] | G_{L}=[9,10] | η_{1H}=[2.5,3.5] | η_{2L}=[25,40] |
| Plastic Sheets | PET, PVC, PS, etc. | S1 | Medium Temperature Two-Component | [65,120] | Horizontal Arrangement of Four Units | Two-step pressing | [t_{1A},t_{1A}+2.5K₁] | [t_{1A},t_{1A}+3K₁] | [t₁-20K₂-5,t₁-20K₂] | G_{H}=[10,12] | η_{1H}=[3,4.5] | η_{2H}=[25,40] |
| | | | Low Temperature Two-Component | [40,65) | | | [t_{1A},t_{1A}+1.5K_{1]} | [t_{1A},t_{1A}+2K₁] | [t_{1A}-20,t_{1A}-15] | G_{L}=[9,10] | η_{1H}=[3,4.5] | η_{2L}=[25,40] |
| | | S3 | Medium Temperature Two-Component | [65,120] | | | [t_{1A},t_{1A}+2.5K₁] | [t_{1A},t_{1A}+3K₁] | [t₁-20K₂-5,t₁-20K₂] | G_{H}=[10,12] | η_{1H}=[3,4.5] | η_{2H}=[25,40] |
| | | | Low Temperature Two-Component | [40,65) | | | [t_{1A},t_{1A}+1.5K_{1]} | [t_{1A},t_{1A}+2K₁] | [t_{1A}-20,t_{1A}-15] | G_{L}=[9,10] | η_{1H}=[3,4.5] | η_{2L}=[25,40] |

## Claims

1. A triplex laminating system **characterized by** comprising:
(1) According to the types of substrates, arrangement, lamination strength, appearance characteristics, and usage requirements of the printed layer S1, the middle layer S2, and the heat-sealing layer S3 in the three-layer composite structure, select the adhesive-coated substrate, adhesive-coated surface, adhesive type, and adhesive mixing machine model;
(2) Determine the corresponding lamination benchmarks and pressing order;
(3) Determine the matching material path, suitable tension control mode, and laminating machine arrangement model;
(4) Calculate and set the process parameters for adhesive coating, tension, temperature, and lamination;
The laminating machine arrangement models include: three-unit horizontal arrangement model, three-unit vertical arrangement model, and four-unit horizontal arrangement model;
The three-unit horizontal arrangement model includes a first frame, under which are sequentially arranged the second unwinding and coating unit, the first unwinding and coating unit, and the laminating and rewinding unit; the first unwinding and coating unit includes the first unwinding unit, the first coating unit, and the first adhesive mixing auxiliary machine; the second unwinding and coating unit includes the second unwinding unit, the second coating unit, and the second adhesive mixing auxiliary machine; the laminating and rewinding unit includes the first laminating unit, the second laminating unit, the rewinding unit, and the third unwinding unit; a material belt moving channel is set at the lower part of the first frame, through which the second adhesive-coated material belt from the second unwinding and coating unit and the first adhesive-coated material belt from the first unwinding and coating unit enter the second laminating unit and the first laminating unit respectively, in parallel and in an up-and-down arrangement; the third unwinding unit delivers a non-adhesive-coated material belt to the second laminating unit;
The three-unit vertical arrangement model includes a second frame, under which are sequentially arranged the first unwinding and coating unit, the laminating and rewinding unit, the third unwinding and coating unit, and the vertical unwinding component located above the laminating and rewinding unit; the first unwinding and coating unit includes the first unwinding unit, the first coating unit, and the first adhesive mixing auxiliary machine; the laminating and rewinding unit includes the first laminating unit, the second laminating unit, and the rewinding unit; the third unwinding and coating unit includes the fourth unwinding unit, the third coating unit, and the third adhesive mixing auxiliary machine; the vertical unwinding component includes the fifth unwinding unit; a material belt moving channel is set in the second frame; the first adhesive-coated material belt from the first unwinding and coating unit enters the first laminating unit; the third adhesive-coated material belt from the third unwinding and coating
unit enters the second laminating unit; the third non-adhesive-coated material belt from the vertical unwinding component enters the second laminating unit;
The four-unit horizontal arrangement model includes a third frame, under which are sequentially arranged the second unwinding and coating unit, the first unwinding and coating unit, the laminating and rewinding unit, and the third unwinding and coating unit; the first unwinding and coating unit includes the first unwinding unit, the first coating unit, and the first adhesive mixing auxiliary machine; the second unwinding and coating unit includes the second unwinding unit, the second coating unit, and the second adhesive mixing auxiliary machine; the laminating and rewinding unit includes the first laminating unit, the second laminating unit, and the rewinding unit; the third unwinding and coating unit is arranged in the opposite direction to the first unwinding and coating unit and includes the fourth unwinding unit, the third coating unit, and the third adhesive mixing auxiliary machine; a material belt moving channel is set in the lower part of the third frame; the second non-adhesive-coated material belt from the second unwinding and coating unit and the first adhesive-coated material belt from the first unwinding and coating unit enter the second laminating unit and the first laminating unit respectively, in parallel and in an up-and-down arrangement; the third adhesive-coated material belt from the third unwinding and coating unit enters the second laminating unit.

2. The triplex laminating system as claimed in claim 1, **characterized in that**:
(A): When the intermediate layer substrate S2 is PET, VMPET, NY, or composite film plastic film, a three-unit horizontal arrangement type is used for compounding; the printed layer S1, as the first substrate tape, is unwound by the first unwinding unit and adhesive is applied on the non-printed surface by the first coating unit; the intermediate layer S2, as the second substrate tape, is unwound by the second unwinding unit and adhesive is applied on the suitable adhesive surface by the second coating unit; the heat-sealing layer S3, as the third substrate tape, is unwound by the third unwinding unit; both substrate adhesive processes use medium or low-temperature adhesive process parameters, and both adhesive types use medium or low-temperature two-component adhesives; for substrates with lower rigidity, the composite process adopts a one-step pressing method, where the three substrate tapes are pressed into a three-layer composite tape by the second composite unit in one step; the composite benchmark is the steel roller of the second composite unit, which serves as the speed and tension control benchmark for the entire machine; for substrates with higher rigidity, the composite process adopts a two-step pressing method; the second substrate tape and the third substrate tape are pressed into a double-layer substrate tape by the second composite unit; the double-layer substrate tape and the first substrate tape are pressed into a three-layer substrate tape by the first composite unit and then rewound by the rewinding unit; the first composite benchmark is the steel roller of the second composite unit, and the second composite benchmark is the steel roller of the first composite unit; the steel roller of the first composite unit serves as the speed and tension control benchmark for the entire machine;
(B): When the intermediate layer substrate S2 is various aluminum foils, a three-unit vertical arrangement type is used for compounding; the printed layer S1, as the first substrate tape, is unwound by the first unwinding unit and adhesive is applied on the non-printed surface by the first coating unit; the intermediate layer S2, as the second substrate tape, is unwound by the fifth unwinding unit; the heat-sealing layer S3, as the third substrate tape, is unwound by the fourth unwinding unit and adhesive is applied on the suitable surface by the third coating unit; both substrate adhesive processes use medium or low-temperature adhesive process parameters, and both adhesive types use medium or low-temperature two-component adhesives; the composite process adopts a two-step pressing method; the second substrate tape and the third substrate tape are pressed into a double-layer substrate tape by the second composite unit; the double-layer substrate tape and the first substrate tape are pressed into a three-layer substrate tape by the first composite unit and then rewound by the rewinding unit; the first composite benchmark is the steel roller of the second composite unit, and the second composite benchmark is the steel roller of the first composite unit; the steel roller of the first composite unit serves as the speed and tension control benchmark for the entire machine;
(C): When the intermediate layer substrate S2 is double-coated paper, a four-unit horizontal arrangement type is used for compounding; the printed layer S 1, as the first substrate tape, is unwound by the first unwinding unit and adhesive is applied on the non-printed surface by the first coating unit; the intermediate layer S2, as the second substrate tape, is unwound by the second unwinding unit but not coated with adhesive; the heat-sealing layer S3, as the third substrate tape, is unwound by the fourth unwinding unit and adhesive is applied on the suitable surface by the third coating unit; both substrate adhesive processes use medium or low-temperature adhesive process parameters, and both adhesive types use medium or low-temperature two-component adhesives; the composite process adopts a two-step pressing method; the second substrate tape and the third substrate tape are pressed into a double-layer substrate tape by the second composite unit; the double-layer substrate tape and the first substrate tape are pressed into a three-layer substrate tape by the first composite unit and then rewound by the rewinding unit; the first composite benchmark is the steel roller of the second composite unit, and the second composite benchmark is the steel roller of the first composite unit; the steel roller of the first composite unit serves as the speed and tension control benchmark for the entire machine;
(D): When the intermediate layer substrate S2 is paper with a relatively rough and loose surface, a four-unit horizontal arrangement type is used for compounding; the printed layer S 1, as the first substrate tape, is unwound by the first unwinding unit and adhesive is applied on the non-printed surface by the first coating unit; the intermediate layer S2, as the second substrate tape, is unwound by the second unwinding unit but not coated with adhesive; the heat-sealing layer S3, as the third substrate tape, is unwound by the fourth unwinding unit and adhesive is applied on the suitable surface by the third coating unit; both substrate adhesive processes use medium or high-temperature adhesive process parameters, and both adhesive types use medium or high-temperature single-component adhesives; the composite process adopts a two-step pressing method; the second substrate tape and the third substrate tape are pressed into a double-layer substrate tape by the second composite unit; the double-layer substrate tape and the first substrate tape are pressed into a three-layer substrate tape by the first composite unit and then rewound by the rewinding unit; the first composite benchmark is the steel roller of the second composite unit, and the second composite benchmark is the steel roller of the first composite unit; the steel roller of the first composite unit serves as the speed and tension control benchmark for the entire machine;
(E): When the intermediate layer substrate S2 is PET, PVC, or PS plastic sheets with a relatively smooth and tight surface, a three-unit horizontal arrangement type is used for compounding; the printed layer S1, as the first substrate tape, is unwound by the first unwinding unit and adhesive is applied on the non-printed surface by the first coating unit; the intermediate layer S2, as the second substrate tape, is unwound by the second unwinding unit and adhesive is applied on the suitable surface by the second coating unit; the heat-sealing layer S3, as the third substrate tape, is unwound by the third unwinding unit; both substrate adhesive processes use medium or low-temperature adhesive process parameters, and both adhesive types use medium or low-temperature two-component adhesives; for substrates with lower rigidity, the composite process adopts a one-step pressing method, where the three substrate tapes are pressed into a three-layer composite tape by the second composite unit in one step; the composite benchmark is the steel roller of the second composite unit, which serves as the speed and tension control benchmark for the entire machine; for substrates with higher rigidity, the composite process adopts a two-step pressing method; the second substrate tape and the third substrate tape are pressed into a double-layer substrate tape by the second composite unit; the double-layer substrate tape and the first substrate tape are pressed into a three-layer substrate tape by the first composite unit and then rewound by the rewinding unit; the first composite benchmark is the steel roller of the second composite unit, and the second composite benchmark is the steel roller of the first composite unit; the steel roller of the first composite unit serves as the speed and tension control benchmark for the entire machine.

3. The triplex laminating system as claimed in claim 2, **characterized in that**: In process (A), the second unwinding unit, the first unwinding unit, the rewinding unit, and the third unwinding unit are arranged sequentially from left to right; the first coating unit is located above the first unwinding unit, and the second coating unit is located above the second unwinding unit; the first compounding unit and the second compounding unit are located above the third unwinding unit and the rewinding unit; in process (B), the first unwinding unit, the rewinding unit, and the fourth unwinding unit are arranged sequentially from left to right; the first coating unit is located above the first unwinding unit, and the third coating unit is located above the fourth unwinding unit; the first compounding unit and the second compounding unit are located above the rewinding unit, and the fifth unwinding unit is located above the second compounding unit; in processes (C, D, and E), the second unwinding unit, the first unwinding unit, the rewinding unit, and the fourth unwinding unit are arranged sequentially from left to right; the first coating unit is located above the first unwinding unit, and the third coating unit is located above the fourth unwinding unit; the first compounding unit and the second compounding unit are located above the rewinding unit.

4. The triplex laminating system as claimed in claim 2, **characterized in that**: In process (A), the tension T1 of the rewinding segment controls the path material tape from the rewinding roll to the first compounding steel roller; the tension T2 of the step compounding segment controls the path material tape from the first compounding steel roller to the second compounding steel roller; the tension T3 of the first channel segment controls the path material tape from the first coating steel roller to the first compounding steel roller; the tension T4 of the first unwinding segment controls the path material tape from the first unwinding roll to the first coating steel roller; the tension T5 of the second channel segment controls the path material tape from the second coating steel roller to the second compounding steel roller; the tension T6 of the second unwinding segment controls the path material tape from the second unwinding roll to the second coating steel roller; the tension T7 of the third unwinding segment controls the path material tape from the third unwinding roll to the second compounding steel roller; in process (B), the tension T1 of the rewinding segment controls the path material tape from the rewinding roll to the first compounding steel roller; the tension T2 of the step compounding segment controls the path material tape from the first compounding steel roller to the second compounding steel roller; the tension T3 of the first channel segment controls the path material tape from the first coating steel roller to the first compounding steel roller; the tension T4 of the first unwinding segment controls the path material tape from the first unwinding roll to the first coating steel roller; the tension T5 of the fifth unwinding segment controls the path material tape from the fifth unwinding roll to the second compounding steel roller; the tension T6 of the third channel segment controls the path material tape from the third coating steel roller to the second compounding steel roller; the tension T7 of the fourth unwinding segment controls the path material tape from the fourth unwinding roll to the third coating steel roller; in processes (C, D, and E), the tension T1 of the rewinding segment controls the path material tape from the rewinding roll to the second compounding steel roller; the tension T2 of the step compounding segment controls the path material tape from the first compounding steel roller to the second compounding steel roller; the tension T3 of the first channel segment controls the path material tape from the first coating steel roller to the first compounding steel roller; the tension T4 of the first unwinding segment controls the path material tape from the first unwinding roll to the first coating steel roller; the tension T5 of the second channel segment controls the path material tape from the second unwinding roll to the second compounding steel roller; the tension T6 of the third channel segment controls the path material tape from the third coating steel roller to the second compounding steel roller; the tension T7 of the fourth unwinding segment controls the path material tape from the fourth unwinding roll to the second coating steel roller.

5. The triplex laminating system as claimed in claim 2, **characterized in that**: High-temperature, medium-temperature, and low-temperature two-component adhesives are supplied by a two-component mixing glue machine, while high-temperature and medium-temperature single-component adhesives are supplied by a single-component glue machine.

6. The triplex laminating system as claimed in claim 2, **characterized in that**: In process (A), a first unwinding tension detection component is set between the first unwinding unit and the first coating unit; a first channel tension detection component is set between the first coating unit and the first compounding unit; a second unwinding tension detection component is set between the second unwinding unit and the second coating unit; a second channel tension detection component is set between the second coating unit and the second compounding unit; a third unwinding tension detection component is set between the third unwinding unit and the second compounding unit; a first tension control roller is set between the first compounding unit and the second compounding unit, and a second tension control roller is arranged between the first compounding unit and the rewinding unit; a first adjustment roller assembly is set between the first channel tension detection component and the first compounding unit; a second adjustment roller assembly is set between the second channel tension detection component and the second compounding unit; a third adjustment roller assembly is set between the third unwinding tension detection component and the second compounding unit.

7. The triplex laminating system as claimed in claim 2, **characterized in that**: In process (B), a first unwinding tension detection component is set between the first unwinding unit and the first coating unit; a first channel tension detection component is set between the first coating unit and the first compounding unit; a third channel tension detection component is set between the third coating unit and the second compounding unit; a first tension control roller is set between the first compounding unit and the second compounding unit, and a second tension control roller is arranged between the first compounding unit and the rewinding unit; a third tension control roller is set between the fifth unwinding unit and the second compounding unit; a first adjustment roller assembly is set between the first channel tension detection component and the first compounding unit; a second adjustment roller assembly is set between the fifth unwinding unit and the second compounding unit; a third adjustment roller assembly is set between the third channel tension detection component and the second compounding unit.

8. The triplex laminating system as claimed in claim 2, **characterized in that**: In processes (C), (D), and (E), the first unwinding unit is equipped with a first unwinding tension detection component between it and the first coating unit; the first coating unit is equipped with a first channel tension detection component between it and the first laminating unit; the second unwinding unit is equipped with a second unwinding tension detection component between it and the second laminating unit; the fourth unwinding unit is equipped with a fourth unwinding tension detection component between it and the third coating unit; the third coating unit is equipped with a third channel tension detection component between it and the second laminating unit; a first tension control roller is positioned between the first and second laminating units, and a second tension control roller is placed between the first laminating unit and the winding unit; the first channel tension detection component is equipped with a first adjustment roller assembly between it and the first laminating unit, the second unwinding tension detection component is equipped with a second adjustment roller assembly between it and the second laminating unit, and the third channel tension detection component is equipped with a third adjustment roller assembly between it and the second laminating unit.

9. The triplex laminating system as claimed in claims 6 to 8, **characterized in that**: A triplex laminating system according to any one of claims 6 to 8, **characterized in that** the first unwinding tension detection component, second unwinding tension detection component, third unwinding tension detection component, and fourth unwinding tension detection component all adopt a tension type with a "U"-shaped wrap angle floating roller balanced low-friction cylinder, with a film wrap angle of 180 degrees; the first channel tension detection component, second channel tension detection component, and third channel tension detection component all adopt a tension type with a "V"-shaped wrap angle floating roller balanced low-friction cylinder, with a film wrap angle of 120 degrees, and the wrap angle entry end is guided by the coating roller.

10. The triplex laminating system as claimed in claim 2, **characterized in that**: A triplex laminating system according to claim 2, **characterized in that** the composite process parameters classified according to the type of intermediate layer S2 in the three-layer composite structure are listed in the table "Composite Arrangement Models and Main Process Parameter Solutions Corresponding to Different Intermediate Layer S2 Substrates":
**Table 1: Composite Arrangement Models and Main Process Parameter Schemes for Different Intermediate Layers (S2) Materials**
| **Type of Intermediate Layer (Barrier Layer) S2 Material and Common Examples** | | **Coating Material** | **Adhesive Type** | **Working Temperature of Adhesive Storage Tank t_{1A}, t_{1B} (°C)** | **Composite Machine Model** | **Composite Process Steps** | **Set Temperature of Steel Roller Heating Machine (°C)** | | | **Measurement Gap of Adhesive Tank (10µm)** | **Transfer Steel Roller Rate η₁** | **Transfer Rubber Roller Rate η₂** |
|---|---|---|---|---|---|---|---|---|---|---|---|---|
| | | | | | | | **Metering and transfer steel rollers t₂** | **Coating Steel Roller t₃** | **Composite Steel Roller t₄** | | | |
| Plastic Film | PET, VMPET, NY, Composite Film | S1 | Medium Temperature Two-Component | [40,60] | Horizontal Arrangement of Three Units | Two-step pressing or One-step pressing | [t_{1A},t_{1A}+1.5K_{1]} | [t_{1A},t_{1A}+2K₁] | [t_{1A}-20,t_{1A}-15] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-5,t_{1A}-3] | G_{L}=[8,9] | η_{1L}=[1.7,2.9] | η_{2L}=[20,25] |
| | | S2 | Medium Temperature Two-Component | [40,60] | | | [t_{1A},t_{1A}+1.5K_{1]} | [t_{1A},t_{1A}+2K₁] | [t_{1A}-20,t_{1A}-15] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-5,t_{1A}-3] | G_{L}=[8,9] | η_{1L}=[1.7,2.9] | η_{2L}=[20,25] |
| Aluminum Foil | Various Aluminum Foils | S1 | Medium Temperature Two-Component | [40,60] | Vertical Arrangement of Three Units | Two-step pressing | [t_{1A},t_{1A}+1.5K_{1]} | [t_{1A},t_{1A}+2K₁] | [t_{1A}-K₃-3 ,t_{1A}-K₃] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-15,t_{1A}-10] | G_{L}=[8,9] | η_{1L}=[1.7,2.9] | η_{2L}=[20,25] |
| | | S3 | Medium Temperature Two-Component | [40,60] | | | [t_{1A},t_{1A}+1.5K_{1]} | [t_{1A},t_{1A}+2K₁] | [t_{1A}-K₃-3 ,t_{1A}-K₃] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-15,t_{1A}-10] | G_{L}=[8,9] | η_{1L}=[1.7,2.9] | η_{2L}=[20,25] |
| Paper | Double Coated Paper | S1 | Medium Temperature Two-Component | [40,60] | Horizontal Arrangement of Four Units | Two-step pressing | [t_{1A},t_{1A}+1.5K_{1]} | [t_{1A},t_{1A}+2K₁] | [t_{1A}-20,t_{1A}-15] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-10,t_{1A}-5] | G_{L}=[8,9] | η_{1L}=[1.7,2.9] | η_{2L}=[20,25] |
| | | S3 | Medium Temperature Two-Component | [40,60] | | | [t_{1A},t_{1A}+1.5K_{1]} | [t_{1A},t_{1A}+2K₁] | [t_{1A}-20,t_{1A}-15] | G_{L}=[8,9] | η_{1L}=[1.7,2.9] | η_{2L}=[20,25] |
| | | | Low Temperature Two-Component | [20,40) | | | [t_{1A},t_{1A}+K₁] | [t_{1A},t_{1A}+1.5K_{1]} | [t_{1A}-10,t_{1A}-5] | G_{L}=[8,9] | η_{1L}=[1.7,2.9] | η_{2L}=[20,25] |
| | Various Other Paper | S1 | Medium Temperature Two-Component | [65,90] | Horizontal Arrangement of Four Units | Two-step pressing | [t₁,t₁+2.5K₁] | [t₁,t₁+3K₁] | [t₁-20K₂-5,t₁-20K₂] | G_{H}=[10,12] | η_{1H}=[2.5,4.5] | η_{2H}=[20,35] |
| | | | Low Temperature Two-Component | [45,65) | | | [t₁,t₁+1.5K₁] | [t₁,t₁+2K₁] | [t_{1A}-30,t_{1A}-25] | G_{L}=[9,10] | η_{1H}=[2.5,3.5] | η_{2L}=[25,35] |
| | | S3 | Medium Temperature Two-Component | [65,90] | | | [t₁,t₁+2.5K₁] | [t₁,t₁+3K₁] | [t₁-20K₂-5,t₁-20K₂] | G_{H}=[10,12] | η_{1H}=[2.5,4.5] | η_{2H}=[20,35] |
| | | | Low Temperature Two-Component | [45,65) | | | [t₁,t₁+1.5K₁] | [t₁,t₁+2K₁] | [t_{1A}-30,t_{1A}-25] | G_{L}=[9,10] | η_{1H}=[2.5,3.5] | η_{2L}=[25,40] |
| Plastic Sheets | PET, PVC, PS, etc. | S1 | Medium Temperature Two-Component | [65,120] | Horizontal Arrangement of Four Units | Two-step pressing | [t_{1A},t_{1A}+2.5K₁] | [t_{1A},t_{1A}+3K₁] | [t₁-20K₂-5,t₁-20K₂] | G_{H}=[10,12] | η_{1H}=[3,4.5] | η_{2H}=[25,40] |
| | | | Low Temperature Two-Component | [40,65) | | | [t_{1A},t_{1A}+1.5K_{1]} | [t_{1A},t_{1A}+2K₁] | [t_{1A}-20,t_{1A}-15] | G_{L}=[9,10] | η_{1H}=[3,4.5] | η_{2L}=[25,40] |
| | | S3 | Medium Temperature Two-Component | [65,120] | | | [t_{1A},t_{1A}+2.5K₁] | [t_{1A},t_{1A}+3K₁] | [t₁-20K₂-5,t₁-20K₂] | G_{H}=[10,12] | η_{1H}=[3,4.5] | η_{2H}=[25,40] |
| | | | Low Temperature Two-Component | [40,65) | | | [t_{1A},t_{1A}+1.5K_{1]} | [t_{1A},t_{1A}+2K₁] | [t_{1A}-20,t_{1A}-15] | G_{L}=[9,10] | η_{1H}=[3,4.5] | η_{2L}=[25,40] |
Table Code Description:
t₁: The set heating temperature value of the adhesive storage tank for a single-component adhesive supply machine;
t_{1A}: The set heating temperature value of the adhesive storage tank for a single-component adhesive supply machine;
t_{1B}: The set heating temperature value of the B adhesive storage tank for a two-component adhesive mixing machine; the arrays in the table represent the upper and lower range values, in unit of °C, and these two values are input into the PLC;
t₂, t₃, t₄: The set heating temperature values for the metering and transfer steel roller, the coating steel roller, and the composite steel roller, respectively; the arrays in the table represent the upper and lower range values, in unit of °C, and these two values are input into the PLC;
K₁, K₂, K₃: The calculation coefficients for the set temperature of the steel roller heating machine, in unit of °C, and these two values are input into the PLC;
G_{L}, G_{H}: The gap values between the metering steel roller and the transfer steel roller at low and high coating amounts; the arrays in the table represent the upper and lower range values, in units of 10 *µm*, and these values are manually adjusted;
η_{1L}, η_{1H}: The set speed coefficients for the transfer steel roller at low and high coating amounts, respectively; the arrays in the table represent the upper and lower range values, and these values are input into the PLC;
η_{2L}, η_{2H}: The set speed coefficients for the transfer rubber roller at low and high coating amounts, respectively; the arrays in the table represent the upper and lower range values, and these values are input into the PLC;
The value ranges for each coefficient are as follows:
K₁ values related to environmental temperature Ke, taking the value as shown in Table 3:
**Table 2. K₁ Value Table**
| | | |
|---|---|---|
| Ke Range (°C) | [10,25] | >25 |
| K₁ Value (°C) | 2 | 1 |
K₂ values related to adhesive storage tank temperature t₁ (or t_{1A}), taking the value as shown in Table 3:
**Table 3. K₂ Value Table**
| | | | | |
|---|---|---|---|---|
| t₁ Range (°C) | [65,75) | [75,90) | [90,105) | t₁≥105 |
| K₂ Value (°C) | 1.5 | 2 | 2.5 | 3 |
K₃ values related to adhesive storage tank temperature t₁ (or t_{1A}), taking the value as shown in Table 4:
**Table 4. K₃ Value Table**
| | | | | |
|---|---|---|---|---|
| t₁ Range (°C) | [40,45) | [45,50) | [50,55) | [55,65] |
| K₃ Value (°C) | 18 | 22 | 27 | 32 |
η_{1L} values related to coating amount 8, taking the value as shown in Table 5:
**Table 5. η_{1L} Value Table**
| | | | | | | | |
|---|---|---|---|---|---|---|---|
| δ Range (g/m²) | [0.8, 1) | [1, 1.2) | [1.2, 1.4) | [1.4, 1.6) | [1.6,1.8) | [1.8, 2) | [2, 2.2] |
| η_{1L} Value | 1.7 | 1.9 | 2.1 | 2.3 | 2.5 | 2.7 | 2.9 |
η_{1H} values related to coating amount δ, taking the value as shown in Table 6:
**Table 6. η_{1H} Value Table**
| | | | | |
|---|---|---|---|---|
| δ Range (g/m²) | [2.2, 2.5) | [2.5, 3) | [3, 3.5) | ≥3.5 |
| η_{1H} Value | 3 | 3.5 | 4 | 4.5 |
η_{2L} values related to coating amount 8, taking the value as shown in Table 7:
**Table 7. η_{2L} Value Table**
| | | | |
|---|---|---|---|
| δ Range (g/m²) | [0.8, 1.2) | [1.2, 1.8) | [1.8, 2.2] |
| η_{2L} Value | 20 | 22 | 25 |
**η_{2H} values related to coating amount δ, taking the value as shown in Table 8: Table 8. η_{2H} Value Table**
| | | | | |
|---|---|---|---|---|
| δ Range (g/m²) | [2.2, 2.5) | [2.5, 3) | [3, 3.5) | ≥3.5 |
| η_{1H} Value | 20 | 25 | 30 | 35 |
G_{H} values related to coating amount δ, taking the value as shown in Table 9:
**Table 9. G_{H} Value Table**
| | | |
|---|---|---|
| δ Range (g/m²) | [2,3] | >3 |
| G_{H} Value (10µm) | [9,10] | [10,12] |
